(19) **Europäisches Patentamt / European Patent Office / Office européen des brevets**

(11) **EP 1 439 293 B1**

(12) **EUROPÄISCHE PATENTSCHRIFT**

(45) Veröffentlichungstag und Bekanntmachung des Hinweises auf die Patenterteilung:
**26.09.2007 Patentblatt 2007/39**

(51) Int Cl.:
*F02D 33/02* (2006.01)        *F02D 41/02* (2006.01)
*B60T 13/00* (2006.01)        *B60T 17/00* (2006.01)

(21) Anmeldenummer: **03100027.6**

(22) Anmeldetag: **09.01.2003**

(54) **Regelung einer Brennkraftmaschine mit Bremskraftverstärker**

Control of an internal combustion engine with brake booster

Contrôle d'un moteur à combustion interne avec servofrein

(84) Benannte Vertragsstaaten:
**DE FR GB**

(43) Veröffentlichungstag der Anmeldung:
**21.07.2004 Patentblatt 2004/30**

(73) Patentinhaber: **Ford Global Technologies, LLC
Dearborn, MI 48126 (US)**

(72) Erfinder:
- **Grieser, Klemens
  40764, Langenfeld (DE)**
- **Borrmann, Dirk
  50354, Huerth (DE)**
- **Eves, Brian David
  Basildon, Essex SS16 5JR (GB)**
- **Brett, Steve Christopher
  Southminster, Essex CM0 7AY (GB)**

(74) Vertreter: **Drömer, Hans-Carsten et al
Ford-Werke Aktiengesellschaft,
Patentabteilung NH/DRP,
Henry-Ford-Strasse 1
50725 Köln (DE)**

(56) Entgegenhaltungen:
EP-A- 0 833 045        EP-A- 1 151 902
US-A- 5 991 681        US-A1- 2002 095 932
US-B1- 6 253 656

- **PATENT ABSTRACTS OF JAPAN vol. 2002, no. 04, 4. August 2002 (2002-08-04) & JP 2001 355494 A (TOYOTA MOTOR CORP), 26. Dezember 2001 (2001-12-26)**

EP 1 439 293 B1

**Beschreibung**

Die Erfindung betrifft ein Verfahren zur Regelung einer Brennkraftmaschine, insbesondere einer Brennkraftmaschine mit Direkteinspritzung und Funkenzündung, in der Aufwärmphase einer mit der Brennkraftmaschine verbundenen Abgasbehandlungseinrichtung, wobei während der Aufwärmphase Maßnahmen zum schnellen Aufwärmen der Abgasbehandlungseinrichtung getroffen werden und wobei mit dem Ansaugkrümmer der Brennkraftmaschine ein unterdruckbetätigter Bremskraftverstärker gekoppelt ist, wobei ein für die Betriebsfähigkeit des Bremskraftverstärkers charakteristischer Druckzustand überwacht wird und bei einem durch die Maßnahmen zum schnellen Aufwärmen der Abgasbehandlungseinrichtung bedingten Unterschreiten einer vorgegebenen Betriebsfähigkeit des Bremskraftverstärkers die Brennkraftmaschine derart geregelt wird, daß der Druck im Bremskraftverstärker erniedrigt wird, wobei während der Aufwärmphase der Brennkraftmaschine deren gewünschte Maximaldrehzahl nach dem Anlassen erhöht wird, um einen ausreichenden Unterdruck im Ansaugkrümmer sicherzustellen.

Ferner betrifft die Erfindung eine Motorregelung für eine Brennkraftmaschine, die zur Durchführung eines derartigen Verfahrens eingerichtet ist.

Bremskraftverstärker werden eingesetzt, um die für das Bremsen eines Kraftfahrzeuges vom Fahrer aufzubringende Kraft zu verringern. Eine dabei häufig anzutreffende Ausgestaltung eines Bremskraftverstärkers weist einen beweglichen Arbeitskolben auf, welcher eine Niedrigdruckkammer von einer Hochdruckkammer trennt. Durch Beaufschlagung der Kammern zu beiden Seiten des Kolbens mit verschiedenen Drücken kann eine Kraft auf den Kolben ausgeübt werden, welche zur Unterstützung des Bremsvorganges ausgenutzt werden kann. Der Unterdruck für die Niedrigdruckkammer wird dabei üblicherweise durch deren Ankopplung an den Ansaugkrümmer der Brennkraftmaschine erzeugt, während die Hochdruckkammer mit dem umgebenden Atmosphärendruck beaufschlagt wird. Ein zuverlässiges Funktionieren des Bremskraftverstärkers setzt daher voraus, daß im Ansaugkrümmer der Brennkraftmaschine ein ausreichender Unterdruck herrscht.

Des Weiteren ist von modernen Brennkraftmaschinen mit Direkteinspritzung und Funkenzündung (DISI: direct injection + spark ignition) bekannt, daß diese gegenüber Brennkraftmaschinen mit Einspritzung im Ansaugrohr (PFI: port fuel injection) während des Anlassens eine erheblich schnellere Erwärmung und damit Aktivierung eines im Abgasweg angeordneten Katalysators erlauben. Die hierzu eingesetzte Regelungsstrategie basiert auf einer Zündungsverzögerung, um den Wärmefluß in das Abgas zu maximieren. Um angesichts der Zündverzögerung die gewünschte Motordrehzahl bei einem Kaltstart aufrecht zu erhalten, muß die Drosselklappe der Brennkraftmaschine entsprechend weiter geöffnet werden, um dem Motor eine größere Luftmenge zuführen zu können. Dies führt wiederum dazu, daß während des forcierten Aufheizens des Katalysators der absolute Druck im Ansaugkrümmer leicht ca. 80 kPa erreichen kann, was einen verhältnismäßig hohen Absolutdruck darstellt (oder, bezogen auf den Atmosphärendruck, einen geringen Unterdruck). Dieser weicht von den Druckanforderungen für eine sichere Funktion eines Unterdruck-Bremskraftverstärkers erheblich ab. Wenn ein Bremssystem bei einem Kaltstart sich auf der Hochdruckseite auf Umgebungsdruck befindet (d.h. ca. 100 kPa auf Meereshöhe), reicht in diesem Falle die Brennkraftmaschine als Unterdruckquelle nicht aus.

Aus der EP 1 151 902 A2 ist ein gattungsgemäßes Verfahren bzw. eine entsprechende Motorregelung bekannt, bei dem bzw. bei der in einer ersten Ausführungsform in der Startphase eines Verbrennungsmotors zur Gewährleistung eines vorgegebenen Unterdruckniveaus in einem Bremskraftverstärker eine Erhöhung der Maximaldrehzahl und in einer zweiten, alternativen Ausführungsform zu demselben Zwecke eine Aussetzung der Zündverzögerung vorgenommen werden soll, ohne dass eine wie immer geartete Kombination beider Maßnahmen vorgeschlagen würde.

Die Aufgabe der vorliegenden Erfindung besteht darin, Mittel bereitzustellen, die das sichere Funktionieren eines Bremssystems mit Bremskraftverstärker bei einem Kaltstart der Brennkraftmaschine unter besonderer Berücksichtigung der Aufwärmphase einer Abgasbehandlungseinrichtung gewährleisten.

Diese Aufgabe wird durch ein Verfahren mit den Merkmalen des Anspruchs 1 sowie durch eine Motorregelung mit den Merkmalen des Anspruchs 5 gelöst.

Vorteilhafte Ausgestaltungen sind in den Unteransprüchen enthalten.

Das erfindungsgemäße Verfahren ist dadurch gekennzeichnet, daß zur Erreichung des vorgegebenen Druckzustandes im Bremskraftverstärker eine zur schnelleren Erwärmung einer Abgasbehandlungseinrichtung der Brennkraftmaschine eingeleitete Zündverzögerung dann und nur dann reduziert oder vollständig ausgesetzt wird, wenn der erforderliche Unterdruck im Bremskraftverstärker durch eine Erhöhung der gewünschten Maximaldrehzahl nach dem Anlassen allein nicht erreicht werden kann.

Bei Brennkraftmaschinen mit Direkteinspritzung und Funkenzündung, bei denen während des Anlassens eine Zündverzögerung zur schnelleren Erwärmung einer Abgasbehandlungseinrichtung (Katalysator) im Abgasweg der Brennkraftmaschine stattfindet, führt eine Zündverzögerung in Verbindung mit der Entdrosselung des Motors zu einer starken Abnahme des Unterdruckes im Ansaugkrümmer. Daher wird die Zündverzögerung reduziert bzw. ausgesetzt, bis der vorgegebene Unterdruck im Bremskraftverstärker erreicht ist. Da mit einer derartigen Maßnahme die Aufwärmzeit der Abgasbehandlungseinrichtungen tendenziell verlängert wird, wird eine derartige Maßnahme nur dann getroffen, wenn mit der vorstehend beschriebenen Erhöhung der gewünschten Maximaldrehzahl nach dem Anlassen die erforderliche Druckabsenkung nicht erreichbar ist.

Im Rahmen der Erfindung wird die Betriebsfähigkeit des Bremskraftverstärkers auch in der Aufwärmphase zuverlässig gewährleistet. Der Druckzustand des Bremskraftverstärkers wird dabei durch eine oder mehrere Größen beschrieben, welche für das Funktionieren des Bremskraftverstärkers wichtige Druckwerte widerspiegeln.

Bei dem vorgeschlagenen Verfahren wird durch die Überwachung des Druckzustandes des Bremskraftverstärkers die Feststellung möglich, ob der Bremskraftverstärker ordnungsgemäß funktionieren kann oder nicht. Falls z. B. erkannt wird, daß eine ordnungsgemäße Funktion aufgrund eines nicht ausreichenden Unterdruckes nicht gewährleistet ist, wird durch eine entsprechende Regelung der Brennkraftmaschine ein möglichst schnelles Erreichen des erforderlichen Unterdruckes eingeleitet. Die für die Sicherheit des Kraftfahrzeuges wichtige Funktion des Bremskraftverstärkers kann auf diese Weise mit hoher Priorität gewährleistet werden.

Wie bereits erwähnt, kann der Druckzustand des Bremskraftverstärkers auf verschiedene Weise ausgedrückt und erfaßt werden. Vorzugsweise erfolgt die Überwachung des Druckzustandes durch die Messung des niedrigen Druckes im Bremskraftverstärker, da es sich hierbei um die von der Brennkraftmaschine abhängige Größe handelt, die zudem stärkeren Variationen unterliegt. Der Druckzustand kann jedoch grundsätzlich auch rechnerisch anhand des Einlaßkrümmerdrucks und eines mathematischen Modells des Druckverhaltens im Bremskraftverstärker bestimmt werden.

Das hohe Druckniveau im Bremskraftverstärker wird in der Regel durch den umgebenden Atmosphärendruck gebildet, für welchen im einfachsten Falle ein konstanter Durchschnittswert (z. B. 100 kPa) angenommen werden kann. Um eine verbesserte Überwachung des Bremskraftverstärkers zu ermöglichen, kann die Überwachung des Druckzustandes auch die Messung der Arbeitsdruckdifferenz im Bremskraftverstärker umfassen. Die Arbeitsdruckdifferenz ist die Differenz zwischen dem hohen und dem niedrigen Druck, welche auf verschiedenen Seiten des Arbeitskolbens des Bremskraftverstärkers wirken, und stellt die für das Funktionieren des Bremskraftverstärkers primär relevante Größe dar. Eine direkte Messung dieser Größe gewährleistet daher ein korrektes Ergebnis der Überwachung auch dann, wenn sich das Fahrzeug in einer Umgebung mit stark vom Durchschnitt abweichendem Atmosphärendruck befindet, z. B. während einer Fahrt in großer Höhe über dem Meeresspiegel.

Für eine Regelung der Brennkraftmaschine, welche einen ausreichenden Unterdruck im Ansaugkrümmer sicherstellt, stehen verschiedene Möglichkeiten zur Verfügung. Vorzugsweise wird diesbezüglich die vorgegebene gewünschte Maximaldrehzahl nach dem Anlassen der Brennkraftmaschine vor der Annahme einer Leerlaufdrehzahl erhöht, wodurch der Unterdruck im Ansaugkrümmer zunimmt.

Das Ausmaß der Erhöhung der gewünschten Maximaldrehzahl nach dem Anlassen gegenüber ihrem Standardwert wird dabei vorzugsweise vom festgestellten Druckzustand im Bremskraftverstärker abhängig gemacht. So kann z. B. ein stark unzureichender Unterdruck im Bremskraftverstärker zu einer stärkeren Erhöhung der gewünschten Maximaldrehzahl nach dem Anlassen führen als eine nur geringe Abweichung des Unterdruckes im Bremskraftverstärker von dem vorgegebenen Wert.

Die Erfindung betrifft ferner eine Motorregelung für die Brennkraftmaschine eines Kraftfahrzeuges, wobei mit dem Ansaugkrümmer der Brennkraftmaschine ein Bremskraftverstärker gekoppelt ist. Die Motorregelung ist dahingehend ausgebildet, daß diese ein Verfahren der vorstehend erläuterten Art ausführen kann. D. h., daß diese insbesondere während der Aufwärmphase der Brennkraftmaschine den Druckzustand des Bremskraftverstärkers überwachen und durch eine entsprechende Steuerung der Brennkraftmaschine dafür sorgen kann, daß ein vorgegebener Unterdruck im Bremskraftverstärker erreicht wird. Da der Druckzustand entscheidend für die ordnungsgemäße Funktion des Bremskraftverstärkers ist, wird durch die Motorregelung somit ständig die Funktionsfähigkeit des Bremskraftverstärkers überwacht. Falls eine Fehlfunktion festgestellt wird, wird durch eine entsprechende Änderung der Motorbetriebsparameter für eine möglichst baldige Wiederherstellung der Funktionsfähigkeit gesorgt.

Ein im Rahmen der Erfindung einsetzbarer Bremskraftverstärker, welcher jedoch nicht Teil der Erfindung ist, weist eine Niedrigdruckkammer, eine Hochdruckkammer und einem Anschluß für die Ankopplung an den Ansaugkrümmer einer Brennkraftmaschine auf. Der Bremskraftverstärker weist mindestens einen Sensor zur Erfassung zur Erfassung der Druckdifferenz zwischen Hochdruckkammer und Niedrigdruckkammer auf. Mit Hilfe eines derartigen Sensors können die für das Funktionieren des Bremskraftverstärkers wichtigen Drücke in den jeweiligen Arbeitsräumen verhältnismäßig einfach und sicher erfaßt werden.

Im Folgenden wird die Erfindung anhand der Zeichnungen beispielhaft näher erläutert. Es zeigen:

Fig. 1   schematisch die zur Durchführung eines erfindungsgemäßen Verfahrens erforderlichen Komponenten;

Fig. 2   ein schematisches Flußdiagramm einer Regelungsstrategie gemäß der vorliegenden Erfindung;

Fig. 3   ein Diagramm mit der zeitlichen Entwicklung verschiedener Motorparameter zur Erläuterung der vorliegenden Erfindung.

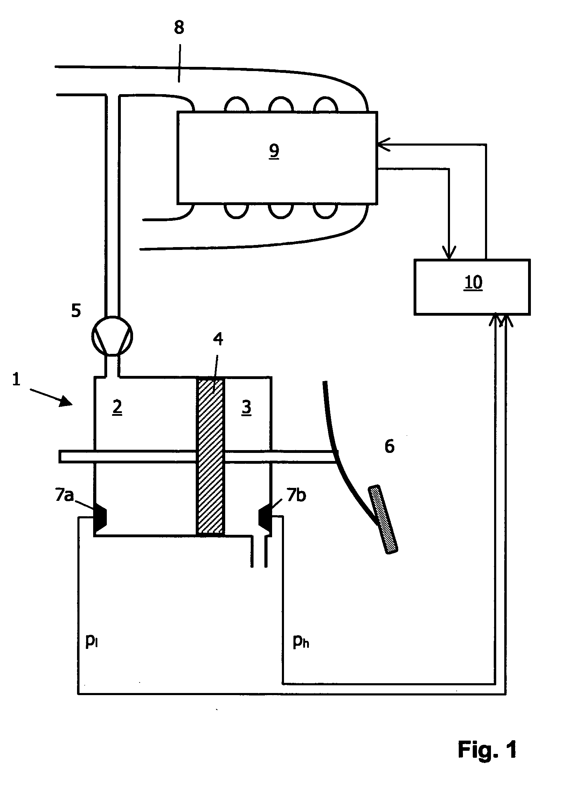

Bei der in der Figur 1 dargestellten Brennkraftmaschine 9 handelt es sich vorzugsweise um einen Benzinmotor mit Direkteinspritzung und Funkenzündung. Die Brennkraftmaschine 9 wird in bekannter Weise über einen Ansaugkrümmer 8 mit Luft versorgt. Abgase verlassen die Brennkraftmaschine 9 über einen Abgaskrümmer und ein Abgasrohr mit einem darin angeordneten Katalysator (nicht dargestellt). Die Regelung des Betriebs der Brennkraftmaschine 9 erfolgt über einen Motorregler 10, welcher z. B. als Mikroprozessor realisiert sein kann und in bekannter Weise verschiedene sensorische Informationen des Kraftfahrzeuges und der Brennkraftmaschine 9 empfängt sowie Steuerungssignale an die Brennkraftmaschine und andere Komponenten des Kraftfahrzeuges abgibt.

Des Weiteren ist in der Figur schematisch ein Bremskraftverstärker 1 dargestellt. Der Bremskraftverstärker 1 enthält einen Arbeitskolben 4, welcher in einem Zylinder beweglich angeordnet ist und eine Niedrigdruckkammer 2 von einer Hochdruckkammer 3 trennt. Ferner ist der Arbeitskolben 4 über eine Kolbenstange mit dem Bremspedal 6 gekoppelt. Durch Erzeugung eines Unterdruckes in der Niedrigdruckkammer 2 und eines im Vergleich hierzu höheren Druckes in der Hochdruckkammer 3 kann eine Kraft auf den Kolben 4 ausgeübt werden, welche als Hilfskraft den Bremsvorgang unterstützt. Der Unterdruck in der Niedrigdruckkammer 2 wird dabei üblicherweise über ein Rückschlagventil 5 aus dem Ansaugkrümmer 8 der Brennkraftmaschine 9 entnommen, während der Hochdruck in der Hochdruckkammer 2 typischerweise dem umgebenden Atmosphärendruck entspricht.

Das sichere Funktionieren des Bremskraftverstärkers 1 setzt voraus, daß über den Arbeitskolben 4 hinweg eine ausreichende Arbeitsdruckdifferenz herrscht, was wiederum einen hinreichenden Unterdruck im Ansaugkrümmer 8 verlangt. Ein derartiger hinreichender Unterdruck im Ansaugkrümmer 8 ist jedoch bei einem Kaltstart der Brennkraftmaschine 9 häufig nicht gewährleistet, da beim Anlassen von Motoren mit Direkteinspritzung und Funkenzündung zwecks schnellerer Erwärmung des Katalysators in der Regel eine Zündverzögerung durchgeführt wird. Um dabei eine ausreichende Drehzahl der Brennkraftmaschine 9 sicherzustellen, muß die Drosselung entsprechend eingestellt werden, was zu Absolutdrücken im Ansaugkrümmer von typischerweise 80 kPa führt. Ein solcher Druck ist als Unterdruck für einen sicheren Betrieb des Bremskraftverstärkers 1 indes nicht ausreichend.

Daher wird der Druckzustand des Bremskraftverstärkers 1 überwacht. Dies geschieht vorzugsweise durch einen Absolutdrucksensor 7a, welcher in der Niedrigdruckkammer 2 angeordnet ist, um den dort herrschenden Druck $p_l$ zu messen und der Motorregelung 10 mitzuteilen. Die Motorregelung 10 kann daher einen unzureichenden Unterdruck erkennen und die Brennkraftmaschine 9 entsprechend so ansteuern, daß der Unterdruck im Ansaugkrümmer 8 auf einen ausreichenden Wert eingestellt wird. Wenn etwa der Druck $p_l$ in der Niedrigdruckkammer 2 zu Beginn der Aufwärmphase der Brennkraftmaschine 9 oberhalb eines vorgegebenen Absolutdruckes von z. B. 60 kPa auf Meereshöhe liegt, kann die Motorregelung 10 die maximale Motordrehzahl nach dem Anlassen und vor dem Leerlaufzustand erhöhen, um einen geringeren Absolutdruck im Ansaugkrümmer 8 nach dem anfänglichen Überschießen der Motordrehzahl zu erzeugen und um damit den gewünschten Unterdruck im Bremskraftverstärker 1 zu erzielen. Dabei hängt das Ausmaß der Erhöhung des Drehzahlüberschießens vorzugsweise von dem Druck $p_l$ in der Niedrigdruckkammer 2 beim Start der Brennkraftmaschine 9 ab, d.h., je höher $p_l$ ist, desto größer ist der Drehzahlüberschuß und umgekehrt.

Falls die vorstehend beschriebene Erhöhung des Drehzahlüberschusses beim Übergang in den Leerlauf nicht einen ausreichenden Unterdruck im Bremskraftverstärker 1 erzeugen konnte, wird von der Motorregelung 10 die Strategie zur schnelleren Erwärmung des Katalysators so lange ausgesetzt, bis der gewünschte Unterdruck im Bremskraftverstärker 1 erreicht ist. Dies führt zu einem normalen Leerlauf der Brennkraftmaschine 9, bei dem der gewünschte geringe Absolutdruck im Ansaugkrümmer 8 von typischerweise 40 kPa schneller erreicht wird.

Falls der Druckzustand des Bremskraftverstärkers 1 nur über den Drucksensor 7a in der Niedrigdruckkammer 2 erfaßt wird, muß der Druck der Hochdruckkammer 3 näherungsweise als konstant - d. h. als durchschnittlicher Atmosphärendruck - vorausgesetzt werden. Um die Genauigkeit des Systems zu verbessern und insbesondere seine zuverlässige Funktion auch bei einem Aufenthalt des Kraftfahrzeuges in großer Höhe über dem Meeresspiegel (d. h. bei geringerem Umgebungsdruck) zu gewährleisten, wird vorzugsweise auch der Druck in der Hochdruckkammer 3 berücksichtigt. Dies kann wie in Figur 1 dargestellt durch einen in der Hochdruckkammer 3 angeordneten zweiten Drucksensor 7b geschehen, welcher der Motorregelung 10 den dort vorherrschenden hohen Absolutdruck mitteilt. Alternativ kann die Motorregelung 10 den Umgebungsdruck auch an anderer Stelle messen, da diese Größe häufig bereits für andere Zwecke der Motorregelung ermittelt wird. Ferner ist es möglich, über einen Differenzdrucksensor (nicht dargestellt) unmittelbar die Druckdifferenz zwischen der Hochdruckkammer 3 und der Niedrigdruckkammer 2 zu erfassen und der Motorregelung 10 mitzuteilen, da es für die Funktion des Bremskraftverstärkers 1 letztlich nur auf diese Druckdifferenz ankommt.

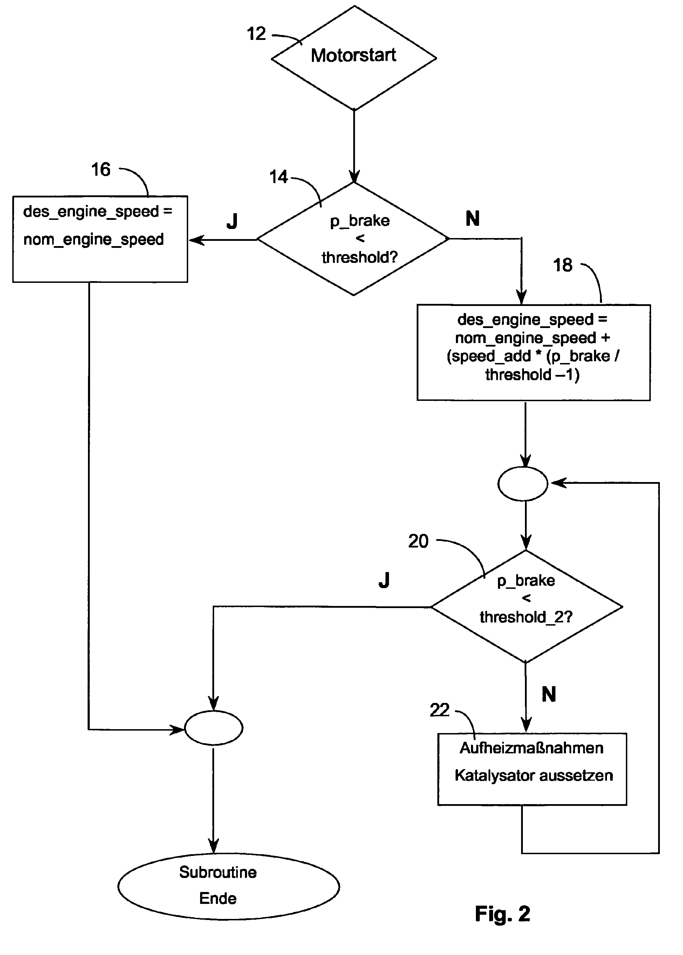

In Fig. 2 ist der Ablauf eines erfindungsgemäßen Verfahrens nochmals detaillierter dargestellt. Nach dem Anlassen des Motors in Schritt 12 wird - nach Ablauf einer gewissen Verzögerung (nicht dargestellt), bis der Absolutdruck im Ansaugkrümmer näherungsweise stationär ist - in Schritt 14 überprüft, ob der Druck im Bremskraftverstärker p_brake unterhalb eines vorgegebenen Schwellwertes (z. B. 40 kPa Absolutdruck) liegt. Falls dieses Kriterium erfüllt ist, kann ein normaler Leerlaufbetrieb mit einer gewünschte Maximaldrehzahl nach dem Anlassen des_engine_speed eingeleitet werden, die einer nominellen Maximaldrehzahl nom_engine_speed (z.B. 1300 min$^{-1}$) entspricht (Schritt 16). Andernfalls wird die gewünschte Maximaldrehzahl nach dem Anlassen in Schritt 18 wie folgt modifiziert d. h. erhöht:

$$\text{des\_engine\_speed} = \text{nom\_engine\_speed} + (\text{speed\_add} * (\text{p\_brake} / \text{threshold} - 1))$$

Bei dem Faktor speed_add handelt es sich um einen Kalibrierungsfaktor, z. B. mit dem Wert 200 min$^{-1}$.

Sollte der Druck im Bremskraftverstärker auch einen zweiten Schwellwert threshold2 (z. B. 50 kPa Absolutdruck) überschreiten (Abfrage 20), so werden in Schritt 22 zusätzlich die forcierten Aufheizmaßnahmen für die Abgasbehandlungsanordnung durch Zündzeitverzögerung reduziert bzw. ausgesetzt, bis der entsprechende zweite Schwellwert erreicht ist. Anschließend wird die entsprechende Subroutine beendet.

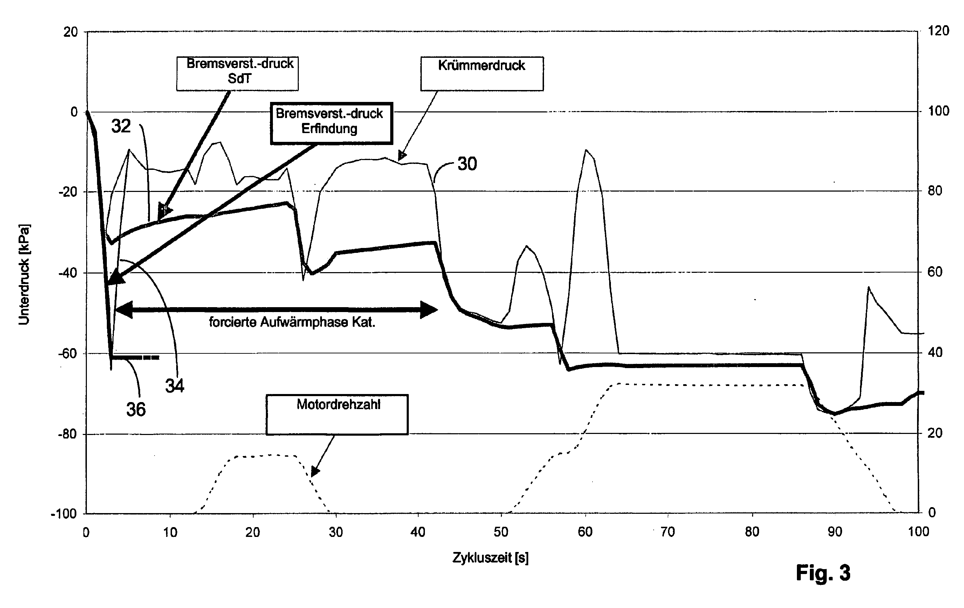

In Fig. 3 ist ein Diagramm verschiedener Motorparameter abhängig von der Zeit dargestellt. Dabei handelt es sich um einen sog. NEDC-Testzyklus bei 20 °C, der zur Schadstoffmessung bei einem vorgegebenen Drehzahl/Lastprogramm herangezogen wird. Die oberste (dünne) Kurve 30 zeigt den Druckverlauf im Einlaßkrümmer. Im Verlauf einer forcierten Aufwärmphase für den Katalysator erreicht der Krümmerunterdruck nach dem Stand der Technik Werte von bis zu -10 kPa, die zum sicheren Betrieb eines Bremskraftverstärkers nicht mehr ausreichen. Entsprechend verharrt der Druck auf der Niederdruckseite des Bremskraftverstärkers (dickere Kurve 32) auf einem hohen Niveau. Dabei nimmt der Druck im Bremskraftverstärker aufgrund des zwischen Einlaßkrümmer und diesem vorhandenen Rückschlagventils bei Nichtbetätigung der Bremsen in etwa den jeweils minimalen Druck im Einlaßkrümmer an.

Gemäß der Erfindung wird der Druck im Einlaßkrümmer bereits wenige Sekunden nach dem Anlassen des Motors durch (im Diagramm nicht dargestellte Maßnahmen) signifikant bis auf etwa -60 kPa abgesenkt (vgl. Kurve 34), so daß auch der Druck im Bremskraftverstärker auf ein niedriges Niveau 36 gelangen kann, das einen sicheren Betrieb des Bremskraftverstärkers gewährleistet (der weitere Verlauf der Kurven 34 und 36 ist nicht dargestellt).

**Patentansprüche**

1. Verfahren zur Regelung einer Brennkraftmaschine (9), insbesondere einer Brennkraftmaschine mit Direkteinspritzung und Funkenzündung, in der Aufwärmphase einer mit der Brennkraftmaschine verbundenen Abgasbehandlungseinrichtung, wobei während der Aufwärmphase Maßnahmen zum schnellen Aufheizen der Abgasbehandlungseinrichtung getroffen werden, und wobei mit dem Ansaugkrümmer (8) der Brennkraftmaschine (9) ein unterdruckbetätigter Bremskraftverstärker (1) gekoppelt ist, wobei ein für die Betriebsfähigkeit des Bremskraftverstärkers (1) charakteristischer Druckzustand überwacht wird und bei einem durch die Maßnahmen zum schnellen Aufwärmen der Abgasbehandlungseinrichtung bedingten Unterschreiten einer vorgegebenen Betriebsfähigkeit des Bremskraftverstärkers (1) die Brennkraftmaschine (9) derart geregelt wird, daß der Druck im Bremskraftverstärker (1) erniedrigt wird, wobei während der Aufwärmphase der Brennkraftmaschine (9) deren gewünschte Maximaldrehzahl nach dem Anlassen erhöht wird, um einen ausreichenden Unterdruck im Ansaugkrümmer (8) sicherzustellen, **dadurch gekennzeichnet, daß** zur Erreichung des vorgegebenen Druckzustandes im Bremskraftverstärker (1) eine zur schnelleren Erwärmung einer Abgasbehandlungseinrichtung der Brennkraftmaschine (9) eingeleitete Zündverzögerung dann und nur dann reduziert oder vollständig ausgesetzt wird, wenn der erforderliche Unterdruck im Bremskraftverstärker (1) durch eine Erhöhung der gewünschten Maximaldrehzahl nach dem Anlassen allein nicht erreicht werden kann.

2. Verfahren nach Anspruch 1, **dadurch gekennzeichnet, daß** die Überwachung des Druckzustandes die Messung des niedrigen Druckes im Bremskraftverstärker (1) umfaßt.

3. Verfahren nach Anspruch 1 oder 2, **dadurch gekennzeichnet, daß** die Überwachung des Druckzustandes die Messung der Arbeitsdruckdifferenz im Bremskraftverstärker (1) umfaßt.

4. Verfahren nach einem der Ansprüche 1 bis 3, **dadurch gekennzeichnet, daß** das Ausmaß der Erhöhung der gewünschten Maximaldrehzahl nach dem Anlassen von dem Druckzustand des Bremskraftverstärkers (1) abhängt.

5. Motorregelung für die Brennkraftmaschine (9) eines Kraftfahrzeuges mit einer Abgasbehandlungsanordnung, wobei mit dem Ansaugkrümmer (8) der Brennkraftmaschine ein unterdruckbetätigter Bremskraftverstärker (1) gekoppelt ist, **dadurch gekennzeichnet, daß** die Regelung dahingehend ausgebildet ist, ein Verfahren nach mindestens einem der Ansprüche 1 bis 4 auszuführen.

**Claims**

1. Method for controlling an internal combustion engine (9), in particular an internal combustion engine with direct injection and spark ignition, in the warming-up phase of an exhaust gas treatment device connected to the internal combustion engine, wherein measures for rapid heating up of the exhaust gas treatment device are taken during the warming-up phase, and wherein a brake booster (1) which is actuated by negative pressure is coupled to the induction manifold (8) of the internal combustion engine (9), wherein a pressure state characteristic of the operability of the brake booster (1) is monitored and, if the brake booster (1) drops below a predetermined level of operability because of the measures for rapid heating up of the exhaust gas treatment device, the internal combustion engine (9) is controlled in such a manner that the pressure in the brake booster (1) is lowered, and wherein, during the warming-up phase of the internal combustion engine (9), the desired maximum speed of rotation thereof is increased after the engine has been started in order to ensure a sufficient negative pressure in the induction manifold (8), **characterized in that**, in order to achieve the predetermined pressure state in the brake booster (1), an ignition delay introduced to bring about more rapid heating of an exhaust gas treatment device of the internal combustion engine (9) is reduced or completely discontinued only if the required negative pressure in the brake booster (1) cannot be achieved solely by increasing the desired maximum speed of rotation after the engine has been started.

2. Method according to Claim 1, **characterized in that** the monitoring of the pressure state includes the measurement of the low pressure in the brake booster (1).

3. Method according to Claim 1 or 2, **characterized in that** the monitoring of the pressure state includes the measurement of the difference in operating pressure in the brake booster (1).

4. Method according to one of Claims 1 to 3, **characterized in that** the extent of the increase of the desired maximum speed of rotation after the engine has been started depends on the pressure state of the brake booster (1).

5. Engine control for the internal combustion engine (9) of a motor vehicle with an exhaust gas treatment arrangement, wherein a brake booster (1) actuated by negative pressure is coupled to the induction manifold (8) of the internal combustion engine, **characterized in that** the control is designed to the effect that a method according to at least one of Claims 1 to 4 can be realized.

**Revendications**

1. Procédé de régulation d'un moteur à combustion interne (9), notamment d'un moteur à combustion interne avec injection directe et allumage par étincelle, dans la phase de chauffage d'un dispositif de traitement des gaz d'échappement connecté au moteur à combustion interne, des mesures pour chauffer rapidement le dispositif de traitement des gaz d'échappement étant prises au cours de la phase de chauffage, et un servofrein (1) actionné par la pression étant accouplé au collecteur d'admission (8) du moteur à combustion interne (9), un état de pression caractéristique de la fonctionnalité du servofrein (1) étant contrôlé et au cas où une fonctionnalité du servofrein (1) était inférieure à une valeur prédéfinie du fait des mesures de chauffage rapide du dispositif de traitement des gaz d'échappement, le moteur à combustion interne (9) étant régulé de telle sorte que la pression dans le servofrein (1) soit réduite, le régime maximal souhaité du moteur à combustion interne (9) pendant sa phase de chauffage étant augmenté après le démarrage, afin de garantir une dépression suffisante dans le collecteur d'admission (8), **caractérisé en ce que** pour obtenir l'état de pression prédéfini dans le servofrein (1), un retard d'allumage amorcé pour chauffer plus rapidement un dispositif de traitement des gaz d'échappement du moteur à combustion interne (9) étant alors, et seulement alors, réduit ou complètement supprimé, si la dépression nécessaire dans le servofrein (1) ne peut pas être obtenue uniquement par une augmentation du régime maximal souhaité après le démarrage.

2. Procédé selon la revendication 1, **caractérisé en ce que** le contrôle de l'état de pression inclut la mesure de la basse pression dans le servofrein (1).

3. Procédé selon la revendication 1 ou 2, **caractérisé en ce que** le contrôle de l'état de pression inclut la mesure de la différence de pression de travail dans le servofrein (1).

**4.** Procédé selon l'une quelconque des revendications 1 à 3,
**caractérisé en ce que**
l'ampleur de l'augmentation du régime maximal souhaité après le démarrage dépend de l'état de pression du servofrein (1).

**5.** Régulation du moteur pour le moteur à combustion interne (9) d'un véhicule automobile avec un agencement de traitement des gaz d'échappement, dans lequel un servofrein (1) actionné par la pression est accouplé au collecteur d'admission (8) du moteur à combustion interne,
**caractérisée en ce que**
la régulation est conçue de manière à mettre en oeuvre un procédé selon au moins l'une quelconque des revendications 1 à 4.

**Fig. 1**

Motorstart

12

14 — p_brake < threshold?

J

N

16 —
des_engine_speed = nom_engine_speed

18 —
des_engine_speed = nom_engine_speed + (speed_add * (p_brake / threshold −1)

20 —
p_brake < threshold_2?

J

N

22 —
Aufheizmaßnahmen Katalysator aussetzen

Subroutine Ende

**Fig. 2**

Fig. 3

**EP 1 439 293 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

*   EP 1151902 A2